# EUROPEAN PATENT SPECIFICATION

(11) **EP 0 408 132 B1**
(45) Date of publication and mention of the grant of the patent: **27.03.1996**
(21) Application number: 90201823.3
(22) Date of filing: 09.07.1990
(51) Int. Cl.: G06F 17/30

(54) **A system for processing data organized in files and a control module for use therein**
System zur Verarbeitung von in Dateien organisierten Daten mit Steuerungsmodul
Système pour traiter des données organisées en fichiers avec module de commande

(30) Priority: 14.07.1989 NL 8901827
(43) Date of publication of application: 16.01.1991
(73) Proprietor: Océ-Nederland B.V., NL-5914 CC Venlo (NL)
(72) Inventor: Van Orsouw, Petrus Wilhelmus Hendricus Gerardus, NL-5623 GE Eindhoven (NL); Prenger, Hendrik Jan, NL-5953 GV Reuver (NL); Langelaan, Freddy Johannes, NL-5953 GN Reuver (NL); Huijgen, Vincentius Bernardus, NL-5915 VV Venlo (NL)
(74) Representative: Hanneman, Henri W.A.M.

(56) References cited:
- EP-A- 0 130 375
- EP-A- 0 216 480
- ELECTRONIQUE APPLICATIONS, no. 58, February/March 1988, pages 61-64, Paris, FR; P. SOTO: "Transfert de fichiers IBM-Apple"
- SYSTEMS AND COMPUTERS IN JAPAN, vol. 19, no. 10, 1988, pages 80-86, Scripta Technica, Inc.; M. NAGATA et al.: "A method for generating messages of the interactive software based on the individual user model"

## Description

The invention relates to a system for processing data organized in files, the data being stored in a file in accordance with one of various possible formats, comprising a memory and a process stage having an operating module for maintaining contact with a user and conversion means provided with converters each adapted to execute a specific conversion and a list of all said converters, for converting, on a command for the purpose, the data in a file from a first format (source format) into a second different format (target format). The invention also relates to a method of converting the format of digital data as is used in the system according to the invention.

Systems of this kind are generally known. They are provided with processing modules which are lodged in the process stage and, at the user's command, can carry out processing operations on data stored in the memory. The data are represented in a specific way by binary codes. The way in which data are coded is based on agreements, known as formats, which are implemented in the system. There are many such formats all differing from one another to a greater or lesser degree.
As a rule, a processing module can only process data if the latter are in a specific format.

Consequently, it may be necessary to convert data from one format to another because they cannot be processed in the form in which they are available. Systems of this kind are frequently equipped with conversion means for this purpose. A survey of the prior art in this area is given in "Document interchange systems", International Datapro reports on wordprocessing, Febr. 1989, McGraw-Hill, page, WP09-100-101 ... WPO9-100-115.

The known conversion means are either program modules which form an integral part of the application package of the system or separate packages specially written for use in a specific system. Expanding the conversion means by a new conversion is therefore a complex affair requiring considerable knowledge of the system and involving considerable work because adjustments have to be made at various places in the package.

European Patent Application EP-A-0 130 375 discloses a data processing system provided with an EBCDIC to ASCII converter and an ASCII to EBCDIC converter.

These converters work by means of conversion tables specifying the translation into a target format of every expression (single- or multi-byte) of a source format. The operator can have the conversion table of a specific conversion displayed and can change entries of the table.

The converters are an integral part of the system software and are directly operated by the operator through the operating module. Upon a conversion command the operator is prompted for the converter selection and the operating module checks the selected converter against the converters available in the system. Any attempt of the operator to specify another conversion than the ones mentioned above results in an error message.

Consequently, when an additional converter is to be installed in the system, the software of the operating module must be changed, so that it accepts the new converter and is able to communicate with it. Further, the converter must be made compatible with the existing operating module, so that it fits in the system as a new integral part. As a consequence, every expansion of the conversion capability of the system makes necessary a great deal of reprogramming.

The object of the invention is to provide a system provided with conversion means which can be readily expanded with new conversions. This object is attained in that in a system according to the invention, the conversion means comprise a control module provided with input and output means connected to the operating module for receiving commands therefrom and sending data relating to a conversion thereto, selection means for selecting a converter or a series of converters from the list on the basis of a received conversion command, and communication means for starting up and then communicating with a selected converter or a converter of said selected series of converters.

As a result of this, the conversion functionality in the system is divided up into a control stage which forms part of the application package of the system, and a number of separate converters which do not belong thereto. These converters are completely shielded from the rest of the system by the control stage. In this way it is possbile to add or remove converters without having to carry out any operations on the software of the system itself.

In one embodiment of the system according to the invention, to further improve the flexibility of this system, data specific to each converter and specifying the commands to and the messages from such converter are stored in the said list, and the communication means are provided with a transformer which regulates the communication with a selected converter by reference to the specific data.

In this way it is possible to add various converters without the converter operating specifications having to satisfy great requirements. When the commands specified for the converter operation differ from those generated by the control module, they are "translated" by the transformer in accordance with the specifications in the list. Conversely, messages delivered by the converter during its operation are transformed by the same transformer into messages comprehensible to the control module. Installation of a new converter is greatly simplified as a result and simply comprises loading the converter software into the memory and storing the name and translation specifications of the converter in the list.

According to another embodiment of the system according to the invention, also stored in the said list are data relating to conversions available by a combination of converters, together with the converters required and the sequence in which they have to be combined. This further enhances the utility of the conversion functionality.

According to another embodiment of the systems according to the invention, the selection means are adapted to inventorise and present to the user for selection all the available target formats on a conversion command, starting from the source format of the data in the file to be converted. This increases the operating convenience for the user, since he simply has to indicate the required conversion, and it is also immediately clear what conversions are possible and hence what are not possible.

In order to inform the user conveniently of any problems occurring in the conversion, the control module is provided with diagnostic means whereby certain messages from those relating to the progress of a conversion as generated during the same are selected on the basis of an importance level preselected by the user and are collected in a file for presentation to the user. In this way the user receives information at his own level and is therefore, for example, not overloaded with information which he does not understand or with which he cannot do anything.

Other features and advantages will be apparent from the following description and the accompanying drawings in which like references denote like parts. In the drawings:
Fig. 1 illustrates a system according to the invention,
Fig. 2 is a schematic of various parts of the system according to the invention,
Fig. 3 is a schematic of various parts of the system according to the invention during a conversion,
Fig. 4 shows an operating field on the system screen.

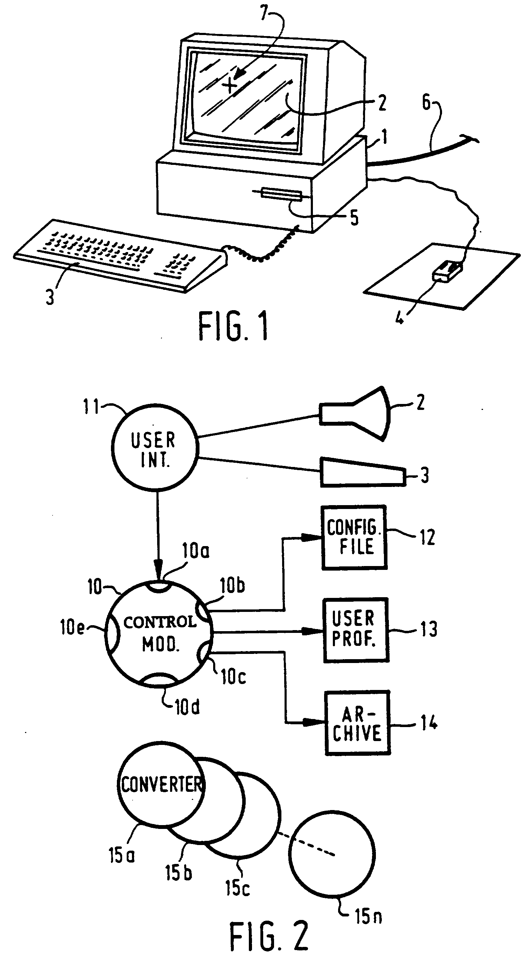

Fig. 1 illustrates a system according to the invention. It comprises a central process stage 1 having a microprocessor and a memory, operating means such as a screen 2, a keyboard 3 and a mouse 4, and storage and connecting means for storing or inputting or outputting data, such as a disk station 5 and a connection 6 to a network of data-processing systems. By means of the mouse 4 it is possible to move an indicator element or cursor 7 over the screen 2.

Programs for processing data are available in the process stage, for example for the makeup of a document from data input via the keyboard 3 or from the storage and connecting means 5, 6.

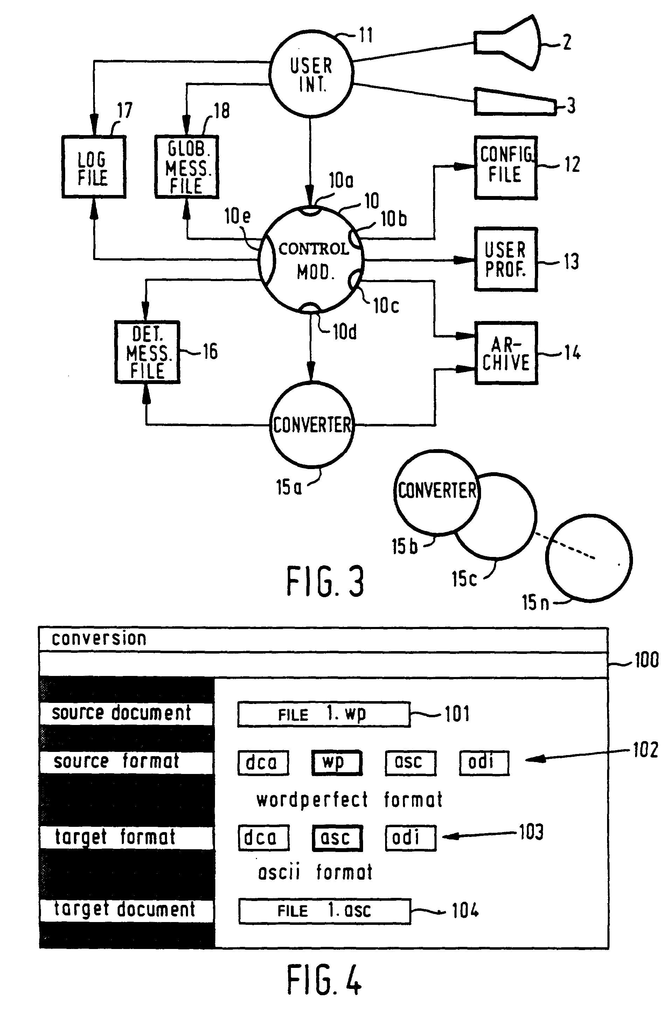

Fig. 2 schematically illustrates that stage of the system of Fig. 1 which is relevant to format conversion.

Central to the implementation of the conversion function is the conversion control module 10. It is connected via an interface 10a to the operating module 11 which by means of the screen 2 and the keyboard 3 provides communication with an operator. The control module is also connected to a number of data files in the system memory, namely the configuration file 12 (via a selection function 10b), the file 13 containing user data (user profile), and the archive 14 (via a connecting function 10c). These three files all belong to the general part of the system and are not intended exclusively for the conversion function. The configuration file 12 contains a list of all the functions available in the system, both hardware and software, with the data for the operation thereof. The user data file 13 contains a list of system options specific to each user permitted to use the system, such as permits and defaults for alternative system functions. Finally, the archive 14 contains data files which have been or are required to be processed by means of the system, e.g. the content of documents made with the system. These files are stored in the archive 14 by name, i.e. each data file in the archive is identified by a unique name and the archive function regulates the physical location of the data of a file itself. Finally, the control module 10 also contains a communication function 10d and a diagnostic function 10e, the operation of which will become clear in the following description.

The system also comprises a number of converters 15a to 15n each adapted for the conversion of a file with data in a specific first format to a file with data in a specific second format. All the converters available in the system are contained in the configuration file.

The converters are programs which are required to be started in a specific way, convert a designated data file, and deliver the converted file under a previously given name to the archive, after which they give a readiness message and stop. During conversion they report problems that they encounter, such as if they meet in the file to be converted data for which there is no equivalent available in the target format. In some cases the converter will then terminate the conversion but in other cases it will simply make a less satisfactory conversion and give a warning.

The set of commands and messages does not have to be the same for each converter in the system described. In fact the configuration file 12 contains for each converter a list of command and messages with the translations comprehensible to the control module.

The complete procedure in the case of a conversion will now be described with reference to Fig. 3 where necessary.

The user selects a specific data file (the "source file", stored in the archive in the "source format") that he wishes to have converted into another format (the "target format"). Selection can be done, for example, by indicating with the cursor on the screen an icon representing the source file.

The user gives the conversion command, e.g. by indicating with the cursor on the screen a menu area representing such command.

The control module searches the source file in the archive via its connecting function 10c and determines the source format. This format may, for example, be indicated in the name of the source file, by a file extension. If the control module is not able to detect the source format, then the control module itself selects a previously prepared and programmed-in default which, for example, comprises the ASCII format, since this is very much used.

By means of the data in the configuration file, the selection function 10b of the control module then searches all the target formats available from the source format, both with single converters and with combinations of converters, and transmits these to the operating module 11 for presentation to the screen. By means of the cursor the user can now select one of these, provided that the target format last used with that source format has already been preselected as target format by the control module. The reason for this is that if the user is involved with a specific processing package, he will probably always want to convert to the specific format of that package, and this preselection is labour-saving for the user.

The user now confirms the target format default or changes the selection. The user can now also input a name for the converted file. If he does not do so, the control module itself gives a name to this file, e.g. by providing the source file name with an extension containing a code for the target format.

An example of an operating field on the screen 2 with which the above-described operation of the conversion function can be carried out is given in Fig. 4. The field contains at the top a space 100 for any messages and queries to the user. It also contains a space 101 for the name of the source file. A series 102 of short names for the formats that can be converted by the system then follows. In the example illustrated, the source format Is "wp", which denotes the Wordperfect format. This is indicated in the operating field by the blackened frame around the option "wp" in the series 102. For the sake of clarity, the format name is also indicated in full therebeneath. If the source format cannot be derived from the file name, the control module asks the user, by means of a message in the space 100, to indicate the source format in the series 102.

Beneath the name of the source format there follows a series 103 with all the target formats possible with the said source format. Since the user in this example had carried out a conversion from Wordperfect format to ASCII format prior to the conversion now described, this format is selected as the default, but the user can change this setting by indicating another format in the series 103. The full name of the target format is again written out beneath the series 103.

Finally, a space 104 for the name of the converted file follows in the operating field. Here again the control module has a default, namely the name of the source file with an extension indicating the target format, but the user can amend this name as he wishes, simply by typing the new name over it.

Once the source and target formats are known, the selection function 10b of the control module determines the conversion path, i.e. determines what converter or converters have to be activated successively. The data for this are in the configuration file. The list with commands and messages of the intended converter or, in the case of a combination of converters, of the first converter, are read out of the configuration file by the control module and prepared for communication with this converter. The following files are then created in the memory by the diagnostic function 10e of the control module: a detailed message file 16, a logbook file 17 and a global message file 18. The control module also brings up from the operating module 11 an identification (name) for a file in which the converted data are to be stored (the "destination file").

The communication function 10d of the control module now starts up the converter 15a and in so doing passes the following data to the converter: the identification of the source file, the name of the destination file and the identification of the detailed message file 16, and also a number of control parameters. The control module also itself writes the starting up of the converter in the detailed message file 16.

The converter 15a fetches the source file form the archive 14, converts it, creates a destination file under the indicated name in the archive 14, writes the result in the destination file and writes any messages in the detailed message file 16. Finally the converter stops its activity, either because the conversion is finished or because a fatal error has occurred, and give its final message at the control module communication function 10d.

On the final message from convertor 15a the diagnostic function 10e of the control module reads the detailed message file 16 out and transfers all the messages therein or part thereof to the logbook file 17. The user data in the file 13 play a part in this respect. The reason for this is that they contain a qualification of the intended user in respect of the extent to which the messages are to be transmitted to him. In the case of the qualification "normal" only a limited selection of messages is transmitted, i.e. those which relate to the conversion as a total process but not, for example, messages from an intermediate step in a combination of converters. This is sufficient information for most users because after all they cannot do anything with messages from the intermediate steps; they have in fact no knowledge that intermediate steps have been performed, because the control module has arranged this. For expert users there is also a qualification "extensive", with which all messages from the detailed message file 16 are transferred to the logbook file 17.

If the target format has been reached, the control module then transfers a simple message to the global message file 18. This is a final message containing the final result of the conversion e.g.: "conversion successful", "conversion successful, but some errors present in result", or "conversion unsuccessful, see logbook file". The control module then reports itself ready at the operating module 11.

If the target format has not yet been reached, and at least one following conversion is still to be performed, the control module repeats the described procedure completely for the next converter, unless the finished conversion has been terminated by a fatal error. In the latter case the control module terminates the conversion procedure, writes a message on this in the global message file 18 and reports the termination to the operating module 11.

The operating module 11 reads out the global message file 18 and presents its contents on the screen 2. If necessary, the user can now display the logbook file 17 on the screen 2 by means of the operating module in order to inspect this file. The user can also bring up the contents of the converted file from the archive 14 and display it on the screen. In the event of non-fatal conversion errors occurring, they are indicated on the screen, e.g. in displaying them in reverse video. The user can then correct them if necessary. This terminates the conversion procedure.

The system described also offers the possibility of converting a number of files to a specific target format by a simple command. For this purpose the user simply has to indicate all the files to be converted in his conversion command. Interactive processing or batch processing can be selected. In the batch mode the control module 10 performs all the required conversions and reports back with all the results after completion. If a fatal error occurs during one of the conversions, such conversion is interrupted and the control module starts on the next. In the interactive mode, however, the control module 10 reports back with its results after each conversion and awaits the user's reaction in the event of an error.

The addition of a new converter is very simple with the system described. A translation table is made once and for all for the new converter and contains all the commands and messages required for communication between the converter and the control module 10. On installation, the converter program is stored in the system memory and the name of the converter together with the translation table is written into the configuration file 12. Starting from the newly added converter it is also possible to make up different conversions by combining the new converter with existing converters. These are also included in the configuration file 12 with a reference to the constituent converters. It would also be possible for this to be carried out automatically by arranging for an installation program present for the purpose in the system to check immediately on installation of a new converter what extra conversions are possible by combination of the new converter with existing converters, and writing this into the configuration file 12. When new conversions have been installed in this way, the control module can immediately identify and use them without the system having to be newly compiled or started.

It will be seen from the above that the system described enables very different converters to be used without their having to satisfy stringent requirements.

Although the invention has been described with reference to the above example, it is not restricted thereto. Numerous alternative embodiments within the scope of the claims will be covered Communication with the user can be arranged in some other way. A successful conversion, for example, need not necessary be reported in a separate message on the screen.

## Claims

1. A system for processing data organized in files, the data being stored in a file in accordance with one of various possible formats, comprising a memory and a process stage having an operating module (11) for maintaining contact with a user and conversion means, provided with converters (15a-15n) each adapted to execute a specific conversion and a list of all said converters, for converting, on a command for the purpose, the data in a file from a first source format into a second different target format, characterised in that the conversion means comprise a control module (10) provided with input and output means (10a) connected to the operating module (11) for receiving commands therefrom and sending data relating to a conversion thereto, selection means (10b) for selecting a converter or a series of converters from the list on the basis of a received conversion command, and communication means (10d) for starting up and then communicating with a selected converter (15a) or a converter of said selected series of converters.

2. A system according to claim 1, characterised in that data specific to each converter (15a-15n) and specifying the commands to and the messages from such converter are stored in the list of all available converters, and in that the communication means (10d) are provided with a transformer which regulates the communication with a selected converter (15a) by reference to the specific data.

3. A system according to claim 1 or 2, characterised in that also stored in the said list are data relating to conversions available by a combination of converters, together with the converters required and the sequence in which they have to be combined.

4. A system according to claim 1, 2 or 3, characterised in that the selection means (10b) are adapted to inventorise and present to the user for selection all the available target formats on a conversion command, starting from the source format of the data in the file to be converted.

5. A system according to any one of the preceding claims, characterised in that the control module (10) is provided with means whereby identification data relating to a data file to be converted stored in the memory and an identification for a destination file for the storage of converted data resulting from a conversion are made known to a started converter (15a) via the communication means (10d).

6. A system according to any one of the preceding claims, characterised in that the control module is provided with diagnostic means (10e) whereby certain messages from those relating to the progress of a conversion as generated during the same are selected on the basis of an importance level preselected by the user and are collected in a file (17) for presentation to the user.

7. A system according to claim 6, characterised in that the diagnostic means (10e) are adapted to create at least one file in the memory for messages relating to the progress of a conversion and to make known to a started converter (15a) via the communication means (10d) identification data of a first file of this kind (16).

8. A system according to claim 7, characterised in that the diagnostic means (10e) are also adapted to select certain messages (16) from those stored in the said first message file and to store the same in a second message file (17).

9. A method of converting digital data having a first format into digital data having a second format, different from said first format, in a data processing system in which data can be stored in a file in accordance with one of various possible formats,
said data processing system having
a memory;
an operating module for maintaining contact with a user;
at least two converters adapted to execute a specific conversion;
the method comprising
storing a list of references to all available converters in the memory
and converting a file of digital data by starting up a specific converter and having said converter convert said digital data;
characterised by,
for the time of a conversion process, transferring control of the conversion from the operating module to a control module, which control module then selects a specific converter or a series of converters from said list on the basis of a conversion command, starts up said selected converter or a converter from said selected series and communicates with the started up converter.

10. A method according to claim 9,
including storing in said memory data specific to each converter and specifying the commands to and the messages from such converter,
and having the control module communicate with a selected converter by reference to said specific data.

11. A method according to claims 9 or 10,
including storing in said list data relating to conversions available by a combination of converters, together with the converters required and the sequence into which they have to be combined.

## Patentansprüche

1. System zur Verarbeitung von in Dateien organisierten Daten, bei dem die Daten in Übereinstimmung mit einem von verschiedenen möglichen Formaten in einer Datei gespeichert sind, mit einem Speicher und einer Verarbeitungsstufe mit einem Bedienungsmodul (11) zum Aufrechterhalten des Kontakts mit einem Benutzer und einer Umwandlungseinrichtung, die mit Wandlern (15a - 15n), die jeweils zur Ausführung einer speziellen Umwandlung ausgebildet sind, und einer Liste all dieser Umwandlungen versehen ist, zum Umwandeln der Daten in einer Datei von einem ersten Quellenformat in ein zweites Zielformat auf einen zu diesem Zweck gegebenen Befehl hin, dadurch gekennzeichnet, daß die Umwandlungseinrichtung ein Steuermodul (10) aufweist, das mit Eingabe- und Ausgabemitteln (10a), die mit dem Bedienungsmodul (11) verbunden sind, um Befehle von diesem zu empfangen und Daten bezüglich einer Umwandlung an dieses zu senden, einer Wähleinrichtung (10b) zum Auswählen eines Wandlers oder einer Serie von Wandlern aus der Liste auf der Grundlage eines empfangenen Umwandlungsbefehls, und einer Kommunikationseinrichtung (10d) zum Aufrufen und zur anschließenden Kommunikation mit einem ausgewählten Wandler (15a) oder einem Wandler aus der ausgewählten Serie von Wandlern versehen ist.

2. System nach Anspruch 1, dadurch gekennzeichnet, daß Daten, die für jeden Wandler (15a - 15n) spezifisch sind und die Befehle an und Meldungen von diesem Wandler spezifizieren, in der Liste aller verfügbaren Wandler gespeichert sind, und daß die Kommunikationseinrichtung (10) mit einem Umformer versehen ist, der die Kommunikation mit einem ausgewählten Wandler (15a) anhand der spezifischen Daten regelt.

3. System nach Anspruch 1 oder 2, dadurch gekennzeichnet, daß in der genannten Liste auch Daten bezüglich Umwandlungen gespeichert sind, die durch eine Kombination von Wandlern verfügbar sind, zusammen mit den erforderlichen Wandlern und der Reihenfolge, in der sie kombiniert werden müssen.

4. System nach Anspruch 1, 2 oder 3, dadurch gekennzeichnet, daß die Wähleinrichtung (10b) dazu ausgebildet ist, auf einen Umwandlungsbefehl hin, ausgehend von dem Quellenformat der Daten in der umzuwandelnden Datei sämtliche verfügbaren Zielformate zu inventarisieren und dem Benutzer zur Auswahl anzubieten.

5. System nach einem der vorstehenden Ansprüche, dadurch gekennzeichnet, daß das Steuermodul (10) mit einer Einrichtung versehen ist, durch die Identifizierungsdaten bezüglich einer im Speicher gespeicherten umzuwandelnden Datei und eine Kennung für eine Zieldatei für die Speicherung der aus einer Umwandlung resultierenden Daten einem aufgerufenen Wandler (15a) über die Kommunikationseinrichtung (10d) mitgeteilt werden.

6. System nach einem der vorstehenden Ansprüche, dadurch gekennzeichnet, daß das Steuermodul mit einer Diagnoseeinrichtung (10e) versehen ist, durch die bestimmte Meldungen unter denjenigen, die sich auf den Fortschritt einer Umwandlung beziehen und während derselben erzeugt werden, auf der Grundlage eines vom Benutzer vorgewählten Wichtigkeitsniveaus ausgewählt und in einer Datei (17) zur Präsentation an den Benutzer gesammelt werden.

7. System nach Anspruch 6, dadurch gekennzeichnet, daß die Diagnoseeinrichtung (10e) dazu ausgebildet ist, wenigstens eine Datei für Meldungen, die sich auf den Fortschritt der Umwandlung beziehen, im Speicher zu erzeugen und einem aufgerufenen Wandler (15a) über die Kommunikationseinrichtung (10d) Identifizierungsdaten für eine erste Datei (16) dieser Art mitzuteilen.

8. System nach Anspruch 7, dadurch gekennzeichnet, daß die Diagnoseeinrichtung (10e) auch dazu ausgebildet ist, bestimmte Meldungen (16) unter den in der ersten Meldungs-Datei gespeicherten auszuwählen und dieselben in einer zweiten Meldungs-Datei (17) zu speichern.

9. Verfahren zum Umwandeln digitaler Daten, die ein erstes Format besitzen, in digitale Daten, die ein zweites, von dem ersten Format verschiedenes Format besitzen, in einem Datenverarbeitungssystem, in dem Daten in Übereinstimmung mit einem von verschiedenen möglichen Formaten in einer Datei gespeichert werden können,
welches Datenverarbeitungssystem aufweist:
einen Speicher,
ein Bedienungsmodul zum Aufrechterhalten des Kontaktes mit einem Benutzer,
wenigstens zwei Wandler, die zur Ausführung einer speziellen Umwandlung ausgebildet sind,
wobei das Verfahren umfaßt:
Speichern einer Liste von Verweisungen auf alle verfügbaren Wandler im Speicher,
und Umwandeln einer Datei von digitalen Daten durch Aufrufen eines bestimmten Wandlers und Veranlassen dieses Wandlers, die digitalen Daten umzuwandeln,
gekennzeichnet durch
die Übertragung der Steuerung der Umwandlung, für die Dauer eines Umwandlungsprozesses, von dem Bedienungsmodul an ein Steuermodul, welches Steuermodul dann einen bestimmten Wandler oder eine Serie von Wandlern auf der Grundlage eines Umwandlungsbefehls aus der Liste auswählt, den ausgewählten Wandler oder einen Wandler aus der ausgewählten Serie aufruft und mit dem aufgerufenen Wandler kommuniziert.

10. Verfahren nach Anspruch 9,
mit Speichern von für jeden Wandler spezifischen Daten, die die Befehle an und die Meldungen von diesem Wandler spezifizieren, im Speicher,
und Veranlassen des Steuermoduls, mit einem ausgewählten Wandler anhand dieser spezifischen Daten zu kommunizieren.

11. Verfahren nach Anspruch 9 oder 10,
mit Speichern von Daten, die sich auf durch eine Kombination von Wandlern verfügbare Umwandlungen beziehen, in der genannten Liste, zusammen mit den erforderlichen Wandlern und der Reihenfolge, in der sie kombiniert werden müssen.

## Revendications

1. Système pour traiter des données organisées en fichiers, les données étant mémorisées dans un fichier en fonction d'un de plusieurs formats possibles, comprenant une mémoire et un étage de traitement possédant un module d'actionnement (11) pour maintenir le contact avec un utilisateur, et des moyens de conversion, équipés de convertisseurs (15a-15n) adaptés chacun pour l'exécution d'une conversion spécifique, et une liste de l'ensemble desdits convertisseurs, pour convertir, sous l'effet d'une commande prévue à cet effet, les données situées dans un fichier depuis un premier format de source en un second format différent cible, caractérisé en ce que les moyens de conversion comprennent un module de commande (10) qui est pourvu de moyens d'entrée et de sortie (10a) raccordés au module d'actionnement (11) pour recevoir des commandes de la part de ce module et envoyer à ce module des données concernant une conversion, des moyens de sélection (10b) pour sélectionner un convertisseur ou une série de convertisseurs sur la base d'une commande de conversion reçue, et des moyens de communication (10d) pour faire démarrer, puis communiquer avec un convertisseur sélectionné (15a) ou un convertisseur de ladite série sélectionnée de convertisseurs.

2. Système selon la revendication 1, caractérisé en ce que des données spécifiques à chaque convertisseur (15a-15n) et spécifiant les commandes envoyées à un tel convertisseur et les messages délivrés par un tel convertisseur sont mémorisées dans la liste de tous les convertisseurs disponibles, et en ce que les moyens de communication (10d) sont équipés d'un transformateur, qui règle la communication avec un convertisseur sélectionné (15a) en référence aux données spécifiques.

3. Système selon la revendication 1 ou 2, caractérisé en ce que dans ladite liste sont également mémorisées des données concernant des conversions disponibles par une combinaison de convertisseurs, conjointement avec les convertisseurs requis et la séquence, dans laquelle ils doivent être combinés.

4. Système selon la revendication 1, 2 ou 3, caractérisé en ce que les moyens de sélection (10b) sont adaptés pour inventorier et présenter à l'utilisateur, en vue de la sélection, tous les formats cibles disponibles lors d'une commande de conversion, en partant du format source des données dans le fichier devant être converti.

5. Système selon l'une quelconque des revendications précédentes, caractérisé en ce que le module de commande (10) est équipé de moyens, grâce auxquels des données d'identification concernant le fichier de données devant être converties, qui sont mémorisées dans la mémoire, et une identification d'un fichier de destination pour la mémorisation de données converties résultant d'une conversion sont signalées à un convertisseur (15a), qui a démarré, par l'intermédiaire des moyens de communication (10d).

6. Système selon l'une quelconque de revendications précédentes, caractérisé en ce que le module de commande est équipé de moyens de diagnostic (10e), ce qui a pour effet que certains messages faisant partie de ceux concernant la progression d'une conversion, tels que produits pendant cette dernière, sont sélectionnés sur la base d'un niveau d'importance présélectionné par l'utilisateur et sont collectés dans un fichier (17) pour leur présentation à l'utilisateur.

7. Système selon la revendication 6, caractérisé en ce que les moyens de diagnostic (10e) sont adaptés pour créer au moins un fichier dans la mémoire pour des messages concernant la progression d'une conversion et pour faire connaître des données d'identification d'un premier fichier de ce type (16) à un convertisseur (15a), qui a démarré, par l'intermédiaire des moyens de communication (10e).

8. Système selon la revendication 6, caractérisé en ce que les moyens de diagnostic (10e) sont également adaptés pour sélectionner certains messages (16) à partir de ceux mémorisés dans ledit premier fichier de messages et pour mémoriser ces messages dans un second fichier de messages (17).

9. Procédé pour convertir des données numériques possédant un premier format en des données numériques possédant un second format, différent dudit premier format, dans un système de traitement de données, dans lequel des données peuvent être mémorisées dans un fichier conformément à l'un de différents formats possibles,
ledit système de traitement de données comportant
une mémoire;
un module d'actionnement pour maintenir un contact avec un utilisateur;
au moins deux convertisseurs aptes à exécuter une conversion spécifique;
le procédé consistant à
mémoriser une liste de références concernant tous les convertisseurs disponibles dans la mémoire et convertir un fichier de données numériques en faisant démarrer un convertisseur spécifique, et amener ledit convertisseur à convertir lesdites données numériques;
caractérisé par
pendant un processus de conversion, le transfert de la commande de la conversion depuis le module d'actionnement à un module de commande, lequel module de commande sélectionne alors un convertisseur spécifique pour une série de convertisseurs à partir de ladite liste sur la base d'une commande de conversion, fait démarrer ledit convertisseur sélectionné ou un convertisseur faisant partie de ladite série sélectionnée et communique avec le convertisseur qui a démarré.

10. Procédé selon la revendication 9,
incluant la mémorisation, dans ladite mémoire, de données spécifiques à ce convertisseur, et la spécification des commandes envoyées à un tel convertisseur et le message provenant d'un tel convertisseur, et
la mise en communication du module de commande avec un convertisseur sélectionné, en référence auxdites données spécifiques.

11. Procédé selon les revendications 9 ou 10,
incluant la mémorisation dans ladite liste, de données concernant des conversions disponibles au moyen d'une combinaison de convertisseurs, conjointement avec les convertisseurs requis et la séquence selon laquelle ils doivent être combinés.
